# EUROPEAN PATENT APPLICATION

(11) **EP 1 744 018 A1**
(43) Date of publication of application: **17.01.2007**
(21) Application number: 06014697.4
(22) Date of filing: 14.07.2006
(51) Int. Cl.: F01D 25/32, F01D 5/14, B23P 15/04

(54) **Steam turbine nozzle vane, nozzle rings and method of fabricating the vane**

(30) Priority: 15.07.2005 JP 2005207326
(71) Applicant: KABUSHIKI KAISHA TOSHIBA, Tokyo (JP)
(72) Inventor: Maeno, Atsushi, 1-1, Shibaura 1-chome, Minato-ku, Tokyo (JP)
(74) Representative: Kramer - Barske - Schmidtchen

(57) **Abstract**

Disclosed is a hollow nozzle blade having drain-discharging function and its fabricating method. A blade main body (22) is formed by die-forging process. A recess (23) is formed in the outer surface of the blade main body (22) by the die-forging process. The recess (23) is covered with a cover plate (24) attached to the blade main body (22), whereby an inner cavity (25) is formed in the nozzle blade (21).

## Description

### BACKGROUND OF THE INVENTION

### Field of the Invention

The present invention generally relates to a steam turbine, and specifically to a hollow nozzle blade of a nozzle diaphragm and a method of fabricating the same. The nozzle diaphragm is configured to prevent erosion of moving blades on the downstream side of the nozzle diaphragm due to collision of drains contained in steam with the moving blades, and also prevent the resultant deterioration in performance of the steam turbine.

### Description of the Related Art

In most of turbine stages of nuclear turbines and geothermal turbines and in low-pressure turbine stages of thermal turbines, part of steam (working fluid) is condensed to be in drains (i.e., water droplets). The drains aggregate around the outer peripheral area of a nozzle diaphragm due to centrifugal force exerted on the drains, run mainly on tip portions of nozzle blades and on an inner circumferential surface of a diaphragm outer ring, and collide with moving blades arranged downstream of the nozzle diaphragm. This results in erosion of tip portions of the moving blades and deterioration of the stage efficiency.

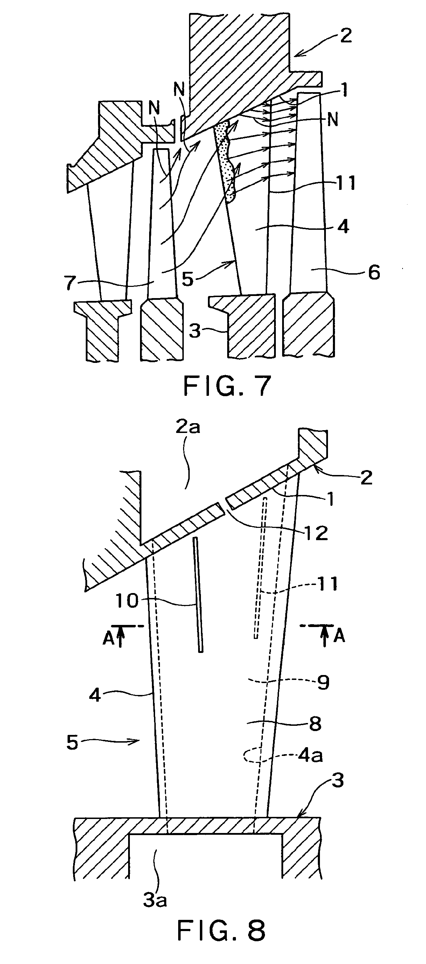

Fig. 7 is a schematic cross-sectional view showing a part of a steam turbine taken along the meridional plane of the steam turbine, in which streamlines of drains are indicated by arrows N. A nozzle diaphragm 5 includes: a diaphragm outer ring 2 having an inner circumferential surface 1; a diaphragm inner ring 3 having an outer circumferential surface; a plurality of nozzle blades 4 circumferentially arrayed between the diaphragm outer ring 2 and the diaphragm inner ring 3 and fixed thereto. A steam passage of the nozzle diaphragm 5 is defined between adjacent nozzle blades 4 in a space between the inner circumferential surface 1 of the diaphragm outer ring 2 and outer circumferential surface of the diaphragm inner ring 2. Moving blades 7 and 6 are arranged upstream and downstream of the nozzle diaphragm 5, respectively.

As wet steam flows in the steam turbine toward the downstream side, fine drains are generated in the steam flow due to expansion of the wet steam. As the fine drains sequentially collide with the upstream-side moving blades 7, the nozzle diaphragm 4 and the downstream-side moving blades 6, the fine drains aggregate to be in larger-sized drains. The drains adhered to the upstream-side moving blades 7 scatter radially outwardly from the moving blades 7, collide with the inner circumferential surface 1 of the diaphragm outer ring 2 of the nozzle diaphragm 5, and run on the inner circumferential surface 1. The drains flown into the nozzle diaphragm 5 also run on the nozzle blades 4. That is, the drain flow in the nozzle diaphragm 5 is classified into two flows, one being a drain flow running on the surfaces of the nozzle blades 4, and the other being a drain flow running on the inner circumferential surface 1 of the diaphragm outer ring 2. These drain flows leave the nozzle diaphragm 5 and collide with the downstream-side moving blades 6 to erode the tip portions of the moving blades 6.

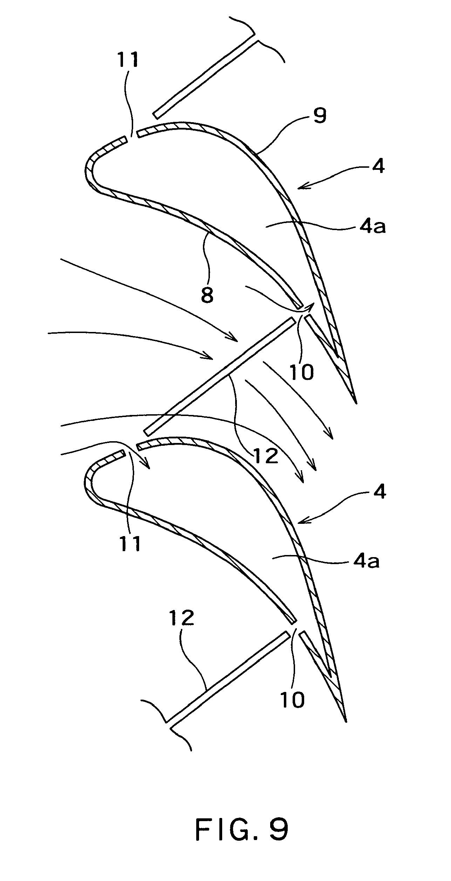

JP08-232604A discloses a nozzle diaphragm having a drain-removing structure that removes drains from the steam flow. Fig. 8 is a cross-sectional view of the nozzle diaphragm taken along the meridional plane of a steam turbine; and Fig. 9 is a cross-sectional view taken along line A-A in Fig. 8. Nozzle blades 4, a diaphragm outer ring 2 and a diaphragm inner ring 3 have inner cavities 4a, 2a and 3a, respectively. The inner cavities 4a are communicated with the inner cavities 2a and 3a. Each of the nozzle blades 4a is provided with drain-suctioning slits 10 and 11 in a face-side blade effective surface 8 and a back-side blade effective surface 9, respectively. The inner circumferential surface 1 of the diaphragm outer ring 2 is also provided with drain-suctioning slits 12 each extending between adjacent nozzle blades 4.

The inner cavity 2a of the diaphragm outer ring 2 is connected to a space of a low pressure such as an interior of a condenser, not shown. Thus, drains existing in the stem passage of the nozzle diaphragm 5 are suctioned into the inner cavities 2a, 3a and 4a. Drains running on the face-side blade effective surface 8 are suctioned into the cavity 4a through the drain-suctioning slit 10. Drains running on the back-side blade effective surface 9 are suctioned into the cavity 4a through the drain-suctioning slit 11. These drains thus suctioned flow into the not shown condenser through the cavity 2a. Drains running on the inner surface 1 of the diaphragm outer ring 2 are suctioned into the inner cavity 2a, and also flow into the condenser.

In this way, the drains entrained by the wet steam flow are suctioned into the nozzle diaphragm 5 to be separated from the steam, whereby the collision of the drains with the downstream-side moving blades 6 is prevented.

Meanwhile, in general, nozzle blades for the steam turbine are fabricated: by machining a material block to be in a predetermined shape; by die-forging a material block and subsequently machining the forged product; or by precision casting. Only two methods of fabricating a hollow nozzle blade are known in the art. One is precision casting. The other method shapes two plates by press work, and subsequently joins the two plates to form a hollow nozzle blade of a bivalve-like structure. However, these two known method can not achieve sufficient profile accuracy of the effective surface of the nozzle blade.

### SUMMARY OF THE INVENTION

The present invention has been made in view of the foregoing problem, and therefore the object of the present invention is to provide a hollow nozzle blade for a steam turbine having a blade effective surface of high profile accuracy, a nozzle diaphragm employing the nozzle blade, and a method of fabricating the nozzle blade.

In order to achieve the above objective, the present invention provides a nozzle blade for a steam turbine, which includes: a blade main body provided in an outer surface thereof with a recess formed by a die forging process; and a cover plate associated with the blade main body, wherein the cover plate covers the recess so as to form an inner cavity in the nozzle blade.

The present invention further provides a nozzle blade for a steam turbine, which includes: a blade main body provided in an outer surface thereof with a recess formed by milling work; and a cover plate associated with the blade main body, wherein the cover plate covers the recess so as to form an inner cavity in the nozzle blade.

In one preferred embodiment of the nozzle blade, the recess may be formed in a tip end portion of the blade main body.
In one preferred embodiment, the nozzle blade further includes: a drain groove provided in a longitudinal direction of the blade main body, wherein the drain groove is connected to the recess; and a cap plate which covers the drain groove.

The present invention further provides a nozzle diaphragm, which includes: a diaphragm inner ring having a cavity therein; a diaphragm outer ring having a cavity therein; and a plurality of nozzle blades circumferentially aligned between the diaphragm inner ring and the diaphragm outer ring, each of the nozzle blade having a tip end and a root end thereof, the tip end of each of the nozzle blades being fixed to the diaphragm outer ring and the root end of each of the nozzle blades being fixed to the diaphragm inner ring, wherein at least one of said plurality of nozzle blades is the foregoing nozzle blade.

In one preferred embodiment of the nozzle diaphragm, said at least one nozzle blade may be configured so that: the outer surface of the blade main body further provided with a drain groove connected to the recess and extending in a longitudinal direction of the blade main body, and the drain groove is covered with a cap plate; the recess opens into the cavity of the diaphragm outer ring; and the drain groove opens into the cavity of the diaphragm inner ring.

The present invention further provides a steam turbine including the foregoing nozzle diaphragm.

The present invention further provides a method of fabricating a nozzle blade for a steam turbine, which includes: die-forging a blade main body to form a recess provided in an outer surface of the blade main body; and covering the recess of the blade main body with a cover plate to form an inner cavity in the nozzle blade.

The present invention further provides a method of fabricating a nozzle blade for a steam turbine, which includes: milling a blade main body to form a recess provided in an outer surface of the blade main body; and covering the recess of the blade main body with a cover plate to form an inner cavity in the nozzle blade.

### BRIEF DESCRIPTION OF DRAWINGS

Fig. 1 is a perspective view of a nozzle blade in the first embodiment of the present invention;
Fig. 2 is a perspective view of a nozzle blade in the second embodiment of the present invention;
Fig. 3 is a perspective view of a main body the nozzle blade of Fig. 1 before a recess formed therein is covered with a cover plate;
Fig. 4 is a perspective view of a main body the nozzle blade of Fig. 2 before a recess formed therein is covered with a cover plate and a cap plate;
Fig. 5 is a schematic, longitudinal cross-sectional view of a turbine stage employing the nozzle blade according to the present invention;
Fig. 6 is a schematic, transverse cross-sectional view of a nozzle diaphragm employing the nozzle blade according to the present invention;
Fig. 7 is a schematic cross-sectional view of two adjacent turbine stages in a steam turbine taken along the meridional plane of the steam turbine, showing streamlines of drains;
Fig. 8 is a schematic cross-sectional view of a conventional nozzle diaphragm; and
Fig. 9 is a cross-sectional view taken along line A-A in Fig. 8.

### DESCRIPTION OF PREFERRED EMBODIMENTS

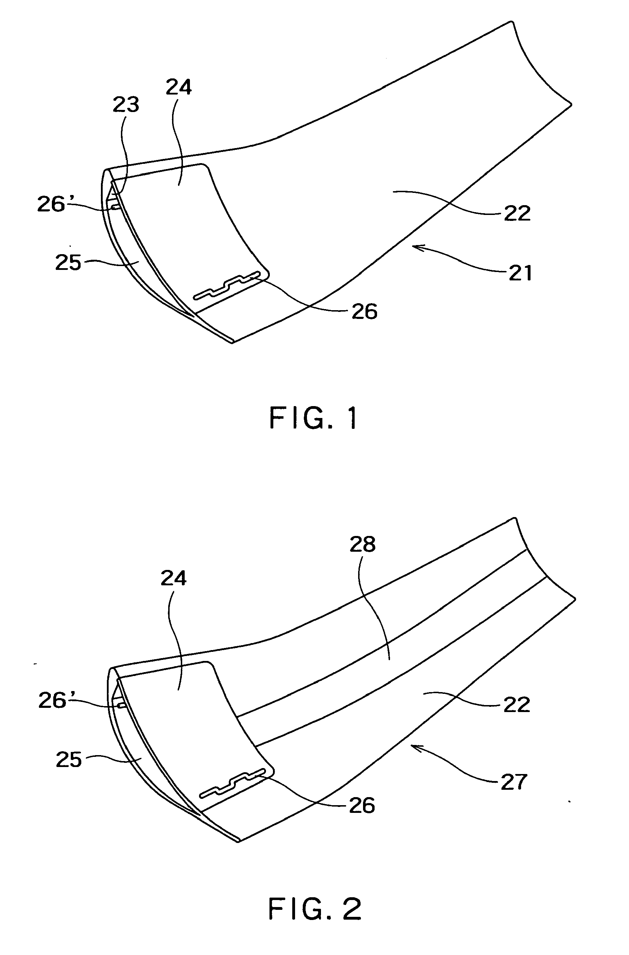

Preferred embodiments of the present invention will be described with reference to the attached drawings.
Referring to Fig. 1, a nozzle blade 21 in the first embodiment of the present invention has a nozzle blade main body 22 (hereinafter referred to as "blade main body" for simplicity.). A recess 23 is formed in a face-side surface of the main body 22 at a tip end portion of the blade main body 22. The recess 23 is covered with a cover plate 24, whereby an inner cavity 25 is defined in the nozzle blade 21 by the recess 23 and the cover plate 24. A slit 26, or an elongated opening, is formed in the cover plate 21. The slit 26 extends in the longitudinal direction of the nozzle blade 21 (i.e., the radial direction of the nozzle diaphragm). The inner cavity 25 is communicated with the exterior of the nozzle blade 21 through the slit 26. Another slit 26', which communicates the inner cavity 25 with the exterior of the nozzle blade 21, is formed in a back-side surface of the blade main body 22. The inner cavity 25 opens into the tip-end face of the completed nozzle blade 21.

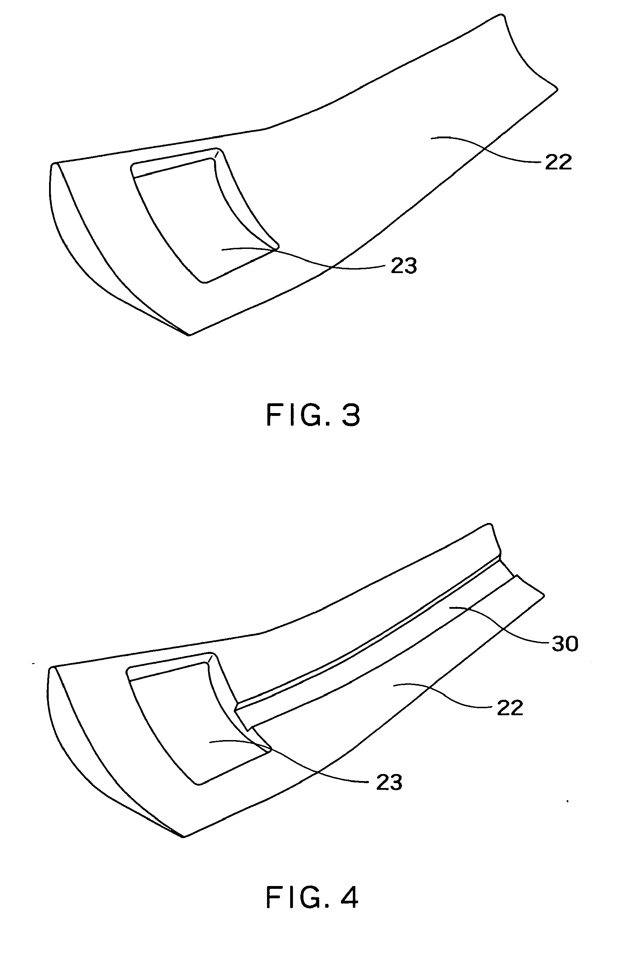

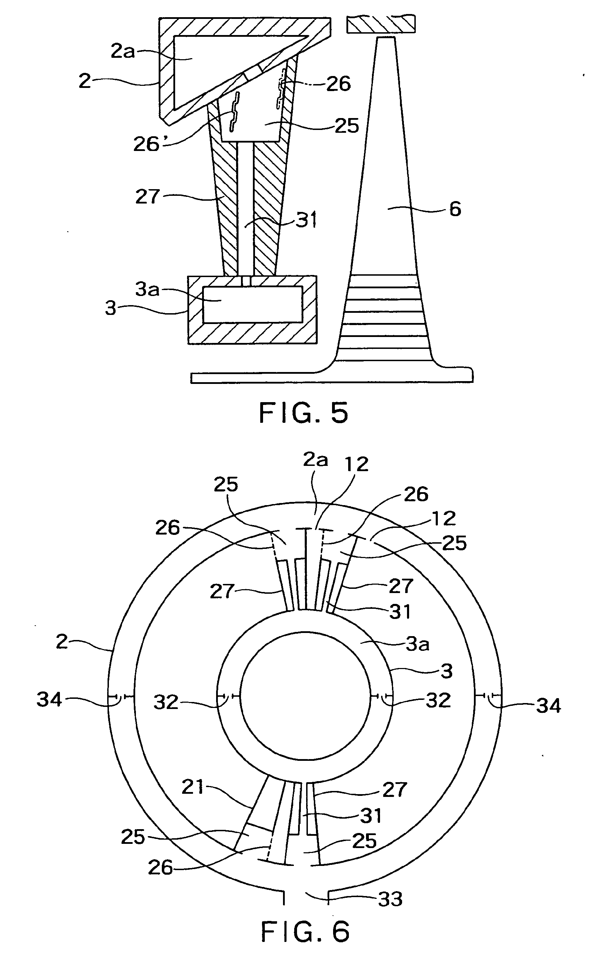

A nozzle blade 27 in the second embodiment of the present invention is shown in Fig. 2, in which the same elements are designated by the same reference numerals in Fig. 1. The nozzle blade 27 of Fig. 2 differs from the nozzle blade 21 of Fig. 1 only in that the former is further provided with an inner channel 31 (which cannot be seen in Fig. 2; see Figs. 5 and 6) defined by a drain groove 30 (which cannot be seen in Fig. 2; see Fig. 4) and a cap plate 28 covering the drain groove 30. The drain groove 30 is formed in the face-side surface of the blade main body 22, and extends in the longitudinal direction of the nozzle blade 27 from the recess 23 to the root end of the blade main body 22 of the nozzle blade 27 to open into the root-end face of the nozzle blade 27. The drain groove 30 is formed by machining, specifically, by milling (using a milling cutter).

In general, it is practically impossible to form an inner cavity in a nozzle blade by a die-forging process that forges a material by using a pair of dies. Accordingly, in the present invention, a recess is formed in a blade main body by a die-forging process, and then the recess is covered by a plate-shaped member; thereby a hollow nozzle blade having an inner cavity can be fabricated.

In detail, in fabricating the nozzle blade 21 shown in Fig. 1, a material block is forged by using a pair of dies, one being a lower die, and the other being an upper die having a protrusion for forming the recess 23, thereby to form the blade main body 22 with a machining allowance (to be removed by machining), as shown in Fig. 3. Then, the blade main body 22 as forged is machined (cut, milled or ground), and subsequently the blade effective surfaces are ground in order to obtain required blade profile accuracy. Thereafter, a cover plate 24 is welded to the blade main body 22 to cover the recess 23, thereby the nozzle blade 21 having the inner cavity 25 defined by the recess 23 covered with the cover plate 24 is formed. Before the welding process, the cover plate 24 is machined such that its surface serving as a part of the blade effective surface has required blade profile accuracy. After the welding process, the tip and root ends of the nozzle blade 21 are machined such that they can be appropriately fixed to the diaphragm outer ring 2 and the diaphragm inner ring 3, respectively. In the illustrated embodiment, the tip end of the nozzle blade 21 is machined such that the recess 23 opens into the tip-end face of the completed nozzle blade 21, as shown in Fig. 1. Thereafter, the cover plate 24 and the back-side surface of the nozzle blade 21 are bored to form the slits 26 and 26' opening into the inner cavity 25. In this way, the fabrication of the nozzle blade 21 shown in Fig. 1 is completed.

The fabrication of the nozzle blade 27 shown in Fig. 2 is differs from that of the nozzle blade 21 shown in Fig. 1 in the following respects. After the forging process and the subsequent machining (grinding) process for achieving required blade profile accuracy, the drain groove 30 extending from the recess 23 to the root end of the nozzle blade main body 22 is formed by machining, specifically, by milling. Before or after the welding of the cover plate 24, the cap plate 28 is fixed to the blade main body 22 by welding to cover the drain groove 30, thereby the inner channel 31, which extends from the inner cavity 25 to the root end of the nozzle blade 27, is formed in the nozzle blade 27.

The nozzle blades 21 and 27 thus fabricated are fixed to the diaphragm outer and inner rings 2 and 3 such that the nozzle blades 21 and 27 are held between the diaphragm outer and inner rings 2 and 3 and are aligned circumferentially, as shown in Figs. 5 and 6. Thereby, the fabrication of the nozzle diaphragm is completed. The tip-end face of the nozzle blade 27 abuts on the surface of the inner circumferential wall of the diaphragm outer ring 2. The root-end face of the nozzle blade 27 abuts on the surface of the outer circumferential wall of the diaphragm inner ring 3. As previously mentioned, since drains aggregates around the outer peripheral area of the nozzle diaphragm, the slits 26 and 26' are advantageously arranged in the tip end portion of the nozzle blade 21(27). The inner cavity 25 of the nozzle blade 27 is thus communicated with the inner cavity 2a of the diaphragm outer ring 2 through a through-hole (see Fig. 5) formed in the inner circumferential wall of the diaphragm outer ring 2. The inner channel 31 is communicated with the inner cavity 3a of the diaphragm inner ring 3 through a through-hole (see Fig. 5) formed in the inner circumferential wall of the diaphragm outer ring 3. The cross-sectional view of the nozzle diaphragm including the nozzle blade 21 is essentially the same as that shown in Fig. 5 except that the inner channel 31 and the corresponding through-hole of the diaphragm inner ring 3 are omitted.

Thus, in the nozzle diaphragm having the nozzle blades 21 and 27, drains running on the blade effective surfaces flow into the interior (i.e., the inner cavities 25) of the nozzle blades 21 and 27 through the slits 26 and 26', flow into the inner cavity 2a of the diaphragm outer ring 2, and then flow into the not shown condenser, in a manner similar to that previously mentioned in the "Background of the Invention" part of the specification with reference to Figs. 7 to 9.

Meanwhile, the nozzle blades 21 and 27 extend radially between the diaphragm outer and inner rings 2 and 3. Accordingly, the tip end of each of the nozzle blades arranged in the upper half part of the nozzle diaphragm is located at a level higher than that of the root end of the same, and thus the drains flown into the inner cavity 25 of the nozzle blade are not likely to be discharged into the inner cavity 2a of the diaphragm outer ring 2. In order to solve this problem, the nozzle blades 27 shown in Fig. 2 are preferably employed in the upper half part of the nozzle diaphragm, as shown in Fig. 6. Thus, the drains flown into the inner cavity 25 smoothly flow through the inner channel 31 downwardly by gravity into the inner cavity 3a of the diaphragm inner ring 3. The drains flown into the inner cavity 3a of the upper half of diaphragm inner ring 3 flows through pipes 32, each of which is arranged in the horizontal joint between the upper half and the lower half of diaphragm inner ring 3, into the inner cavity 3a of the lower half of diaphragm inner ring 3.

On the other hand, as the tip end of each of the nozzle blades arranged in the upper half part of the nozzle diaphragm is located at a level lower than that of the root end of the same, the drains flown into the inner cavity 25 of the nozzle blade are readily discharged into the inner cavity 2a of the diaphragm outer ring 2. Accordingly, the nozzle blades employed in the lower half part of the nozzle diaphragm may be the nozzle blades 21 without the inner channel 31, reducing the total fabrication cost of the nozzle diaphragm.

However, the lowermost nozzle blade in the lower half part of the nozzle diaphragm is preferably the nozzle blade 27 with the inner channel 31, as shown in Fig. 6. In this case, the inner cavity 2a of the diaphragm outer ring 2 and the inner cavity 3a of the diaphragm inner ring 3 are communicated with each other through the interior space (i.e., the inner cavity 25 and the inner channel 31) of the lowermost nozzle blade 27. Thus, the drains flown from the inner cavity 3a of the upper half of the diaphragm inner ring 3 into the inner cavity 3a of the lower half of the diaphragm inner ring 3 through the pipes 32 flow into the inner cavity 2a of the diaphragm outer ring 2 through the inner channel 31 and the inner cavity 25, and is discharged from the diaphragm outer ring 2 into the not shown condenser through a drain port 33 arranged at the lowermost part of the lower half of the diaphragm outer ring 2. Due to the use of the nozzle blade 27 as the lowermost nozzle blade, a drain pipe connected to the diaphragm inner ring 3, which otherwise must be provided, may be omitted, simplifying the piping arrangement.

Drains flown into the inner cavity 2a of the upper half of the diaphragm outer ring 2 through the drain-suctioning slits 12 (see Fig. 6) formed in the inner circumferential wall of the upper half of the diaphragm outer ring 2 flow into the inner cavity 2a of the lower half of the diaphragm outer ring 2 through pipes 34 each arranged in the horizontal joint between the upper half and the lower half of diaphragm outer ring 2. Drains flown into the inner cavities 25 of the nozzle blades 21 and 27 arranged in the lower half part of the nozzle diaphragm through the slits 26 and 26' flow into the inner cavity 2a of the lower half of the diaphragm outer ring 2. These drains flown into the inner cavity 2a of the lower half part of the diaphragm outer ring 2 is discharged through the drain port 33 into the not shown condenser. Note that, in nozzle diaphragm according to the present invetion, the drain-suctioning slits 12 are arranged in the diaphragm outer ring 2 in the same manner as that shown in Figs. 8 and 9.

The foregoing embodiment of the present invention achieves the following advantages. As the nozzle blade main body is formed by the die-forging process and the subsequent machining process (specifically, grinding process), the blade effective surfaces with high profile accuracy can be obtained. As the most part (i.e., the recess 23) of the concave portion (i.e., the recess 23 and the drain-groove 30) is formed by the forging process, the workload of machining and thus the fabrication cost of the nozzle blade can be reduced. As the recess 23 and the drain groove 30 are formed in the face-side surface of the nozzle blade main body 22, the profile accuracy of the back-side blade effective surface, which has a great influence on the nozzle throat performance, is not adversely affected by the provision of the inner cavity 25 and the inner channel 31. If the cover plate 24 and the cap plate 28 are welded to the nozzle blade main body 22 by a laser beam welding process which inputs a small amount of heat to the welded materials, the deformation of the nozzle blade main body 22, the cover plate 24 and the cap plate 28 can be suppressed, achieving the blade effective surfaces with high profile accuracy.

The interior space (i.e., the inner cavity 25 and the inner channel 31) of the nozzle blade may be arranged in a different manner, as long as the interior space achieves the foregoing drain-discharging function. For example, the recess 23 may be formed such that the recess 23 extends in the longitudinal direction of the nozzle blade over the entire length of the nozzle blade while the drain groove 30 is omitted. Such an elongated recess may be formed by a die-forging process. Alternatively, a first drain groove (30) connecting the recess 23 to the tip end of the nozzle blade main body 23 on the tip-end side thereof and a second drain groove (30) connecting the recess 23 to the root end of the nozzle blade main body 23 on the root-end side thereof may be arranged. It should be noted that: different names ("recess (cavity)" and "groove (channel)") are given to elements 23 (25) and 30 (31) just for the sake of convenience in explanation; and an elongated recess may be interpreted as a "groove" while the short groove may be interpreted as a "recess"; and the terms "recess" and "grooves" must be interpreted to mean any concave portion formed in the surface of the blade main body to be covered by a plate-shaped member (i.e., the cover plate 24 and the cap plate 28). It should be also noted that: different names ("cover plate" and "cap plate") are given to elements 24 and 28 just for the sake of convenience in explanation; and each of the elements 24 and 28 is just a plate-shaped member covering a concave portion (i.e., the recess 23 and the groove 30) of the blade main body 22.

In another embodiment, the recess 23 may be formed by milling process instead of the die-forging process. This embodiment also achieves advantages essentially the same as those of the foregoing embodiment. In this embodiment, the fabricating processes other than the process for forming the recess 23 may be the same as those described in connection with the foregoing embodiment.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A nozzle blade for a steam turbine comprising:
a blade main body provided in an outer surface thereof with a recess formed by a die forging process; and
a cover plate associated with the blade main body,
wherein the cover plate covers the recess so as to form an inner cavity in the nozzle blade.

2. A nozzle blade for a steam turbine comprising:
a blade main body provided in an outer surface thereof with a recess formed by milling work; and
a cover plate associated with the blade main body,
wherein the cover plate covers the recess so as to form an inner cavity in the nozzle blade.

3. The nozzle blade according to claim 1 or 2, wherein an outer surface of the cover plate serves as a part of a blade effective surface.

4. The nozzle blade according to any of claims 1 to 3, wherein the cover plate is fixed to the blade main body by welding.

5. The nozzle blade according to any of claims 1 to 4, wherein a slit is formed in the cover plate.

6. The nozzle blade according to any of claims 1 to 5, wherein the recess is formed in a tip end portion of the blade main body.

7. The nozzle blade according to any of claims 1 to 6, further comprising:
a drain groove provided in a longitudinal direction of the blade main body, wherein the drain groove is connected to the recess; and
a cap plate which covers the drain groove.

8. The nozzle blade according to claim 7, wherein the drain groove continuously extends from the recess to a root end of the blade main body.

9. A nozzle diaphragm comprising:
a diaphragm inner ring having a cavity therein;
a diaphragm outer ring having a cavity therein; and
a plurality of nozzle blades circumferentially aligned between the diaphragm inner ring and the diaphragm outer ring, each of the nozzle blade having a tip end and a root end thereof, the tip end of each of the nozzle blades being fixed to the diaphragm outer ring and the root end of each of the nozzle blades being fixed to the diaphragm inner ring, wherein at least one of said plurality of nozzle blades is the nozzle blade according to any of claims 1 to 8.

10. The nozzle diaphragm according to claim 9, wherein said at least one nozzle blade is configured so that: the outer surface of the blade main body is further provided with a drain groove connected to the recess and extending in a longitudinal direction of the blade main body, and the drain groove is covered with a cap plate; the recess opens into the cavity of the diaphragm outer ring; and the drain groove opens into the cavity of the diaphragm inner ring.

11. The nozzle diaphragm according to claim 10, wherein the nozzle blade having the drain groove is arranged in an upper half part of the nozzle diaphragm.

12. The nozzle diaphragm according to claim 10, wherein the nozzle blade having the drain groove is a lowermost one of said plurality of nozzle blades.

13. A steam turbine comprising the nozzle diaphragm as defined in any of claims 9 to 12.

14. A method of fabricating a nozzle blade for a steam turbine comprising:
die-forging a blade main body to form a recess provided in an outer surface of the blade main body; and
covering the recess of the blade main body with a cover plate to form an inner cavity in the nozzle blade.

15. A method of fabricating a nozzle blade for a steam turbine comprising:
milling a blade main body to form a recess provided in an outer surface of the blade main body; and
covering the recess of the blade main body with a cover plate to form an inner cavity in the nozzle blade.

16. The method according to claim 14 or 15, further comprising:
machining a drain groove in the blade main body, wherein the drain groove is longitudinally extending from the recess to an end of the blade main body; and
covering the drain groove of the blade main body with a cap plate.

17. The method according to any of claims 1 to 16, wherein the cover plate is shaped so as to form a part of a blade effective surface.

18. The method according to any of claims 14 to 17,
wherein the blade main body has a machining allowance; and further comprising:
machining the blade main body having the recess to a required final dimension within a tolerance range, before covering the recess of the blade main body with the cover plate.

19. The method according to any of claims 14 to 18 further comprising:
forming a slit in the cover plate.
